Europäisches Patentamt

European Patent Office

Office européen des brevets

(19)

(11) Veröffentlichungsnummer: **0 157 344**
**B1**

(12) # EUROPÄISCHE PATENTSCHRIFT

(45) Veröffentlichungstag der Patentschrift:
14.09.88

(51) Int. Cl.⁴: **H 02 B 1/08,** E 05 D 7/10,
E 05 D 5/10, H 05 K 7/16

(21) Anmeldenummer: 85103592.3

(22) Anmeldetag: 26.03.85

(54) Schaltschrank mit am Schrankkorpus angelenkter Schranktür.

(30) Priorität: 02.04.84 DE 8410106 U

(43) Veröffentlichungstag der Anmeldung:
09.10.85 Patentblatt 85/41

(45) Bekanntmachung des Hinweises auf die Patenterteilung:
14.09.88 Patentblatt 88/37

(84) Benannte Vertragsstaaten:
DE FR NL SE

(56) Entgegenhaltungen:
FR - A - 716 946
FR - A - 817 184
US - A - 3 673 636
US - A - 4 249 227

(73) Patentinhaber: Rittal-Werk Rudolf Loh GmbH & Co. KG,
Siegener Strasse 31, D-6341 Rittershausen (DE)

(72) Erfinder: Debus, Jürgen, Ing .grad., Am Ebersbach 50,
D-6344 Dietzhölztal 1 (DE)
Erfinder: Zachrel, Jürgen, Ing. grad., Am Hungersberg 2,
D-6341 Dillenburg 8 (DE)

(74) Vertreter: Vogel, Georg, Hermann-Essig-Strasse 35,
D-7141 Schwieberdingen (DE)

**Beschreibung**

Die Erfindung betrifft einen Schaltschrank mit einer mittels Scharniere am Schrankkorpus angelenkten Schranktür, bei dem jedes Scharnier ein auf der Innenseite der Schranktür befestigtes erstes Scharnierteil mit einem Lagerauge und ein mit einem vertikalen Rahmenschenkel des Schrankkorpus verbundenes zweites Scharnierteil mit zwei Lageraugen aufweist und bei dem Lagerbolzen jeweils das zwischen den beiden Lageraugen des zweiten Scharnierteiles angeordnete Lagerauge des ersten Scharnierteils gelenkig miteinander verbinden.

Bei den bekannten Schaltschränken dieser Art ist in der Regel pro Scharnier ein einziger Lagerbolzen verwendet, der das Lagerauge des ersten Scharnierteils und durch die beiden Lageraugen des zweiten Scharnierteils gesteckt ist. Dabei kann der Lagerbolzen von oben her eingesteckt werden, bis ein im Durchmesser größerer Endbund am oben liegenden Lagerauge des zweiten Lagerteils anstößt. Auf diese Weise wird der Lagerbolzen in einer Kopplungsstellung gehalten, kann aber leicht wieder nach oben aus den Lageraugen der beiden Scharnierteile herausgezogen werden.

Diese Anlenkung einer Schranktür an dem Schrankkorpus eines Schaltschrankes vermag nicht zu befriedigen, da zum Lösen der Gelenkverbindung die Lagerbolzen voll herausgezogen werden und nicht mehr unverlierbar am Schrankkorpus oder der Schranktür gehalten sind.

Wie die DE-OS 26 23 140 zeigt, ist der Lagerbolzen einer derartigen Gelenkverbindung auch schon mit zwei im Abstand zueinander angeordneten Rastnuten versehen worden, wobei die einander zugekehrten Begrenzungsflächen der Rastnuten keilförmig ausgebildet sind. An einem Lagerauge ist eine Rastfeder angebracht, die in die eine oder andere Rastnut einrastet und so zwei Raststellungen des Lagerbolzens festlegt. In der einen Raststellung ist der Lagerbolzen an einem Lagerauge des zweiten Scharnierteils in einer Entkopplungsstellung gehalten, in der er aus dem anderen Lagerauge des zweiten Scharnierteils und dem Lagerauge des ersten Scharnierteils herausgezogen ist und das erste Scharnierteil freigibt. Die Kopplungsstellung wird durch dieselbe Rastfeder an dem einen Lagerauge des zweiten Scharnierteils festgehalten, die dann in die andere Rastnut des Lagerbolzens einrastet. Der Lagerbolzen kann noch eine dritte Rastnut aufweisen, in die eine weitere Rastfeder, die am anderen Lagerauge des zweiten Scharnierteils festgelegt ist, einrastet und die Kopplungsstellung sicher festhält.

Bei dieser Anlenkung müssen vor der Einstellung der Lagerbolzen in die Entkopplungsstellung die Rastfedern von den Lageraugen des zweiten Scharnierteils entfernt werden. Dann müssen die Lagerbolzen durch Druck auf eine ihrer Stirnseiten aus den Lageraugen der Scharnierteile herausgedrückt werden. Diese Ausgestaltung erfordert nicht nur einen großen Verstellweg für die Lagerbolzen, sie hat auch den Nachteil, daß die Lagerbolzen zur Verstellung nicht gut zugänglich sind.

Es ist Aufgabe der Erfindung, bei einem Schaltschrank der eingangs erwähnten Art die Anlenkung der Schranktür an dem Schrankkorpus so zu verbessern, daß die Lagerbolzen zur Einstellung der Entkopplungsstellung leicht zugänglich sind und nach einem kleinen Verstellweg sicher in der Entkopplungsstellung gehalten werden.

Diese Aufgabe wird nach der Erfindung dadurch gelöst, daß in jedes Lagerauge des zweiten Scharnierteils ein an sich bekannter Lagerbolzen eingesetzt ist, der zwei im Abstand angeordnete und an den einander zugekehrten Begrenzungsflächen keilförmig abgeschrägte Rastnuten zur Aufnahme einer am zugeordneten Lagerauge festgelegten Rastfeder aufweist, daß die Lagerbolzen von den dem Lagerauge des ersten Scharnierteils abgekehrten Enden der Lageraugen des zweiten Scharnierteils her einführbar sind, wobei jeweils in einer ersten Raststellung der in die einen Rastnuten einrastenden Rastfedern die Lagerbolzen in einer Entkopplungsstellung festgehalten sind, in der sie das Lagerauge des ersten Scharnierteils freigeben, und wobei in einer zweiten Raststellung der in die anderen Rastnuten einrastenden Rastfedern die Lagerbolzen in einer Kopplungsstellung festgehalten sind, in der sie mit einem Lagerabschnitt in das Lagerauge des ersten Scharnierteils eingeführt sind und daß die Lagerbolzen in der Kopplungsstellung noch mit einem mittels einer Ringnut abgesetzten Halteabschnitt aus den dem Lagerauge des ersten Scharnierteils abgekehrten Enden der Lageraugen des zweiten Scharnierteiles vorstehen.

Durch die Zuordnung von jeweils zwei gleichen Lagerbolzen pro Scharnier wird der Verstellweg auf ein Maß reduziert, das kleiner als die halbe axiale Abmessung des Lagerauges des ersten Scharnierteils sein kann. Die in der Kopplungsstellung an den Enden der Lageraugen des zweiten Scharnierteils vorstehenden Halteabschnitte der Lagerbolzen lassen in Verbindung mit der anschließenden, ebenfalls freiliegenden Ringnut ein Ausheben des Lagerbolzens mit einem Schraubenzieher zu, der sich dabei an dem zugekehrten Lagerauge abstützen kann. Da der Schraubenzieher dabei im wesentlichen quer zum Lagerbolzen angesetzt werden kann, läßt sich die erforderliche Stellkraft wesentlich leichter auf den Lagerbolzen übertragen als bei der bekannten Ausgestaltung der Gelenkverbindung. Dies ist von Bedeutung, da die Scharniere oft im Bereich einer abgewinkelten Kante der Schranktür und noch in deren Eckbereiche angeordnet sind. Die Stirnseiten der Lagerbolzen sind dabei besonders schwer zugänglich.

Eine Ausgestaltung ist dadurch gekennzeichnet, daß die einander abgekehrten und senkrecht zu der Längsachse des Lagerbolzens stehenden Begrenzungsflächen der beiden Rastnuten jeweils einen Abstand zueinander einnehmen, der etwa der halben axialen Abmessung der gleich ausgebildeten Lageraugen des zweiten Scharnierteils entspricht und daß die Rastfedern jeweils in der Mitte der Lageraugen durch Querschlitze in die Bohrungen der Lageraugen ragen. Die optimale Lagerung des Lagerauges des ersten Scharnierteils ergibt sich dann, wenn vorgesehen ist, daß die axiale Abmessung der Lagerabschnitte der Lagerbolzen gleich oder kleiner ist als die halbe axiale Abmessung des Lagerauges des ersten Scharnierteils.

Das Einführen der Lagerbolzen in das Lagerauge des ersten Scharnierteils beim Herstellen der Kopplungsstellung wird nach einer Ausgestaltung dadurch erleichtert, daß die Lagerabschnitte der Lagerbolzen an ihren freien Enden kegelstumpfartige Einführungsabschnitte aufweisen.

Damit in der Kopplungsstellung die Ringnut bündig mit dem zugekehrten Ende des Lagerauges des zweiten Scharnierteils abschließt, sieht eine weitere Ausgestaltung vor, daß die Ringnut und die benachbarte Rastnut des Lagerbolzens über einen Führungsabschnitt voneinander getrennt sind, dessen axiale Abmessung der halben axialen Abmessung der Lageraugen des zweiten Scharnierteils entspricht.

Damit die Rastverbindungen zwischen den Rastfedern und den Rastnuten der Lagerbolzen aufgehoben werden können, ohne die Rastfedern von den Lageraugen des zweiten Scharnierteils lösen zu müssen, ist nach einer weiteren Ausgestaltung vorgesehen, daß die Rastfedern mit einem abgewinkelten Ende in den Querschlitzen der Lageraugen des zweiten Scharnierteils befestigt sind, wobei die Befestigungsstelle jeweils an dem der Lagerbohrung des Lagerauges abgekehrten Ende des Querschlitzes angeordnet ist.

Ist nach einer weiteren Ausgestaltung vorgesehen, daß die Lageraugen an einer Befestigungsplatte des zweiten Scharnierteils abstehend angeformt sind, daß die den Lageraugen abgekehrte Stirnseite der Befestigungsplatte mit einer einzigen Befestigungsaufnahme versehen ist, daß auf der den Lageraugen abgewandten Befestigungsseite der Befestigungsplatte in Rasterteilung angeordnete Fixieransätze angeformt sind und daß der vertikale Rahmenschenkel einen zur geschlossenen Schranktür senkrecht stehenden Schließflansch aufweist, dessen Befestigungsfläche mit auf die Rasterteilung der Fixieransätze abgestimmten Fixieraufnahmen versehen ist, dann kann jedes zweite Scharnierteil mittels einer einzigen Befestigungsschraube an dem Schrankkorpus angebracht werden, wobei die Rasterteilung der Fixieraufnahmen und der Fixieransätze die Befestigungsstellen definiert sind.

Die Erfindung wird anhand eines in den Zeichnungen dargestellten Ausführungsbeispiels näher erläutert. Es zeigt:

Fig. 1 einen Längsschnitt durch ein Scharnier, wobei ein Lagerbolzen in der Kopplungsstellung und der andere Lagerbolzen in der Entkopplungsstellung dargestellt sind,

Fig. 2 einen Querschnitt durch das Scharnier nach Fig. 1 entlang der Linie II–II und

Fig. 3 eine perspektivische Teilansicht, die die Anlenkung einer Schranktür an einem vertikalen Rahmenschenkel des Schrankkorpus eines Schaltschrankes mittels eines Scharniers nach Fig. 1 erkennen läßt.

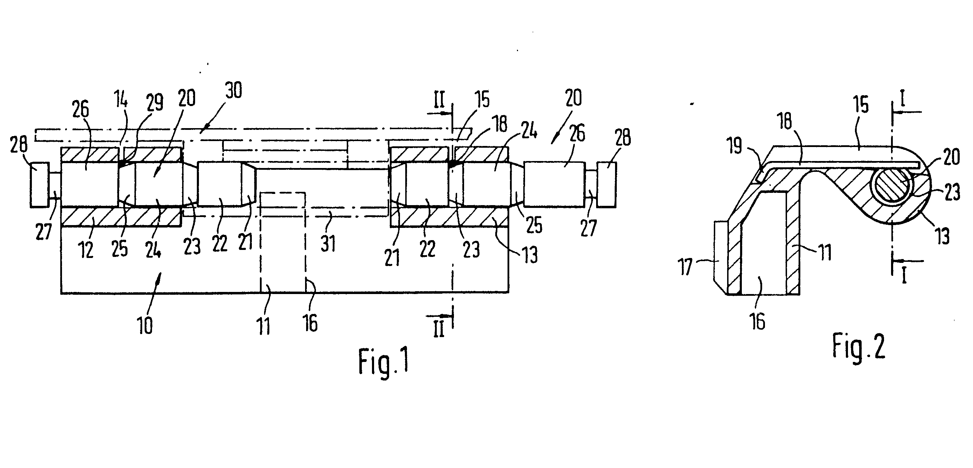

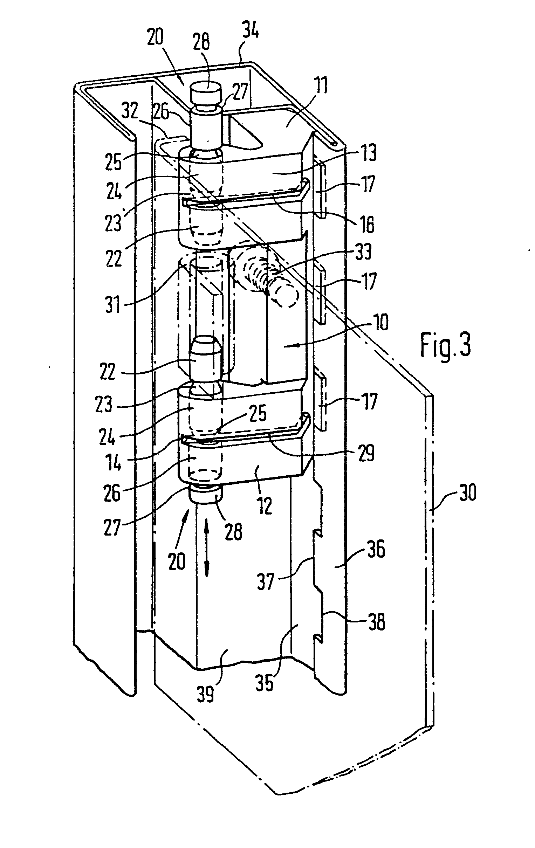

Bei dem Scharnier nach den Fig. 1 und 2 besteht das erste Scharnierteil 31 im wesentlichen aus dem Lagerauge, welches in eine Befestigungsplatte ausläuft, die auf der Innenseite der Schranktür 30 befestigt werden kann, wie Fig. 3 zeigt. Die zugekehrte vertikale Kante 32 der Schranktür 30 kann abgewinkelt sein.

Das zweite Scharnierteil 10 besteht im wesentlichen aus der Befestigungsplatte 11, an der die beiden gleichen Lageraugen 12 und 13 angeformt sind und abstehen. Der Abstand der einander zugekehrten Enden der Lageraugen 12 und 13 entspricht der axialen Abmessung des Lagerauges des ersten Scharnierteils 31. In der den Lageraugen abgekehrten Stirnseite trägt die Befestigungsplatte 11 eine einzige Befestigungsaufnahme 16, in die die Befestigungsschraube 33 eingeschraubt wird. Der Rahmenschenkel 34 des Schrankkorpus hat dabei in dem Wandabschnitt 39 entsprechende Bohrungen, die mit Bohrungen in dem parallel dazu verlaufenden äußeren Wandabschnitt des Rahmenschenkels 34 fluchten. Die den Lageraugen 12 und 13 abgewandte Befestigungsseite der Befestigungsplatte 11 ist mit Fixieransätzen 17 versehen, die sich in gleichmäßiger Rasterteilung über die axiale Abmessung der Befestigungsplatte 11 erstrecken und vorzugsweise quadratischen oder rechteckförmigen Querschnitt haben. Der senkrecht zur geschlossenen Schranktür 30 stehende Schließflansch 35 des Rahmenschenkels 34 trägt auf der Befestigungsseite für die zweiten Scharnierteile 10 entsprechende Fixieraufnahmen 38, die in derselben Rasterteilung durch die Lappen 37 an einem umgebogenen Endabschnitt 36 des Schließflansches 35 abgeteilt sind. Das zweite Scharnierteil 10 kann daher an stufig versetzten Befestigungsplatten an dem Schließsteg 35 befestigt werden, wobei die Rasterteilung das Stufenmaß bestimmt.

Die beiden für ein Scharnier benötigten Lagerbolzen 20 sind identisch ausgebildet, sie werden um 180° verdreht in die Lageraugen 12 und 13 des zweiten Scharnierteils 10 eingesteckt, und zwar von den dem Lagerauge des ersten Scharnierteils 31 abgekehrten Enden der Lageraugen 12 und 13 her. In die Lageraugen 12 und 13 sind der Befestigungsaufnahme 16 abgekehrt mittig die Querschlitze 14 und 15 eingebracht, die bis zu den Lagerbohrungen der Lageraugen 12 und 13 reichen. In jedem Querschlitz 14 und 15 ist eine Rastfeder 18 und 29 befestigt, und zwar mit einem abgewinkelten Ende 19, das der Lagerbohrung 16 des Lagerauges 12 bzw. 13 abgekehrt mit der Befestigungsplatte 11 verbunden ist. Die Rastfedern 18 und 29 können an ihren freien Enden zur Aufhebung der Rastverbindung leicht angehoben werden.

Wie in Fig. 1 am Beispiel des rechten Lagerbolzens 20 gezeigt ist, wird beim Einstecken der Lagerabschnitte 22 mit dem kegelstumpfartigen Einführungsabschnitt 21 zunächst in das Lagerauge 13 eingeschoben, bis die Rastfeder 18 in die Rastnut 23 einrastet und den Lagerbolzen 20 in der Entkopplungsstellung festhält. Der Einführungsabschnitt 21 und der Lagerabschnitt 22 des Lagerbolzens 20 stehen dabei noch nicht im Eingriff mit dem Lagerauge des ersten Scharnierteils 31. Nehmen beide Lagerbolzen 20 diese Entkopplungsstellung ein, dann ist die Gelenkverbindung aufgehoben. Die beiden Lagerbolzen 20 bleiben aber unverlierbar an dem zweiten Scharnierteil 10 gehalten, da die senkrecht zu der Längsachse des Lagerbolzens 20 stehende Begrenzungsfläche der Rastnut 23 den Lagerbolzen 20 solange festhält, wie die Rastfeder 18 im Eingriff mit der Rastnut 23 steht. Die anschließende keilförmig ansteigende Begrenzungsfläche der Rastnut 23 erlaubt aber ein weiteres Einschieben des Lagerbolzens 20, wobei die Rastfeder 18 bzw. 29 entsprechend ausgelenkt wird, bis sie in die Rastnut 25 einrastet, wie der linke Lagerbolzen 20 in Fig. 1 erkennen läßt. Die senkrecht zur Längsachse des Lagerbolzens 20 stehende Begrenzungsfläche der Rastnut 25 verhindert ein weiteres Einschieben des Lagerbolzens 20, der nun mit dem Einführungsabschnitt 21 und dem Lagerabschnitt 22 in das Lagerauge des ersten Scharnierteils 31 eingeführt ist und die Gelenkverbindung herstellt. Die Lagerung kann dann optimal sein, wenn der Lagerabschnitt 22 mit dem Einführungsabschnitt 21 eine axiale Abmessung aufweist, die der halben axialen Abmessung des Lagerauges des ersten Scharnierteils 31 entspricht. Um den Verstellweg der Lagerbolzen von der Kopplungsstellung in die Entkopplungsstellung möglichst klein zu halten, genügt es auch, wenn sich der Lagerabschnitt 22 nur über einen Teil der axialen Abmessung des Lagerauges des ersten Scharnierteils erstreckt, wie Fig. 1 zeigt. Der Abstand der beiden Rastnuten 23 und 25 ist auf den Verstellweg abgestimmt. Der Abschnitt 24 zwischen den Rastnuten 23 und 25 dient ebenso wie der Führungsabschnitt 26 zur Lagerung des in der Kopplungsstellung befindlichen Lagerbolzens 20 in dem Lagerauge 12 bzw. 13. Der Führungsabschnitt 26 ist so ausgelegt, daß in der Kopplungsstellung die Ringnut 27 bündig mit dem zugekehrten Ende des Lagerauges 12 bzw. 13 des zweiten Scharnierteils 10 abschließt. Der Halteabschnitt 28 bildet ein Widerlager, so daß der Lagerbolzen 20 mit Hilfe eines Schraubenziehers leicht aus der Kopplungsstellung in die Entkopplungsstellung verstellt werden kann. Dabei lenkt die keilförmig ansteigende Begrenzungsfläche der Rastnut 25 die Rastfeder 18 bzw. 29 entsprechend aus, bis sie wieder in die Rastnut 23 einrasten und die Entkopplungsstellung des Lagerbolzens 20 festlegen kann. Werden die Rastfedern 18 und 29 an ihren freien Enden angehoben, dann lassen sich die Lagerbolzen 20 ganz aus den Lageraugen 12 und 13 des zweiten Scharnierteils 10 herausziehen, wenn dies erforderlich sein sollte. Die Lagerbolzen 20 sind nach dem Einsetzen in die Lageraugen 12 und 13 unverlierbar gehalten und können zwischen der Kopplungsstellung und der Entkopplungsstellung beliebig oft verstellt werden, um die Gelenkverbindung wahlweise herstellen oder aufheben zu können.

**Patentansprüche**

1. Schaltschrank mit einer mittels Scharniere am Schrankkorpus angelenkten Schranktür (30), bei dem jedes Scharnier ein auf der Innenseite der Schranktür (30) befestigtes erstes Scharnierteil (31) mit einem Lagerauge und ein mit einem vertikalen Rahmenschenkel (34) des Schrankkorpus verbundenes zweites Scharnierteil (10) mit zwei Lageraugen (12, 13) aufweist und bei dem Lagerbolzen (20) jeweils das zwischen den beiden Lageraugen (12, 13) des zweiten Scharnierteiles (10) angeordnete Lagerauge des ersten Scharnierteils (31) gelenkig miteinander verbinden,

dadurch gekennzeichnet,

daß in jedes Lagerauge (12, 13) des zweiten Scharnierteils (10) ein an sich bekannter Lagerbolzen (20) eingesetzt ist, der zwei im Abstand angeordnete und an den einander zugekehrten Begrenzungsflächen keilförmig abgeschrägte Rastnuten (23, 25) zur Aufnahme einer am zugeordneten Lagerauge (12, 13) festgelegten Rastfeder (18, 29) aufweist,

daß die Lagerbolzen (20) von den dem Lagerauge des ersten Scharnierteils (31) abgekehrten Enden der Lageraugen (12, 13) des zweiten Scharnierteils (10) her einführbar sind, wobei jeweils in einer ersten Raststellung der in die einen Rastnuten (23) einrastenden Rastfedern (18, 29) die Lagerbolzen (20) in einer Entkopplungsstellung festgehalten sind, in der sie das Lagerauge des ersten Scharnierteils (31) freigeben, und wobei in einer zweiten Raststellung der in die anderen Rastnuten (25) einrastenden Rastfedern (18, 29) die Lagerbolzen (20) in einer Kopplungsstellung festgehalten sind, in der sie mit einem Lagerabschnitt (22) in das Lagerauge des ersten Scharnierteils (31) eingeführt sind und

daß die Lagerbolzen (20) in der Kopplungsstellung noch mit einem mittels einer Ringnut (27) abgesetzten Halteabschnitt (28) aus den dem Lagerauge des ersten Scharnierteils (31) abgekehrten Enden der Lageraugen (12, 13) des zweiten Scharnierteils (10) vorstehen.

2. Schaltschrank nach Anspruch 1, dadurch gekennzeichnet,

daß die einander abgekehrten und senkrecht zu der Längsachse des Lagerbolzens (20) stehenden Begrenzungsflächen der beiden Rastnuten (23, 25) jeweils einen Abstand zueinander einnehmen, der etwa der halben axialen Abmessung der gleich ausgebildeten Lageraugen (12, 13) des zweiten Scharnierteils (10) entspricht und daß die Rastfedern (18, 19) jeweils in der Mitte der Lageraugen (12, 13) durch Querschlitze (14, 15) in die Bohrungen der Lageraugen (12, 13) ragen.

3. Schaltschrank nach Anspruch 1 oder 2, dadurch gekennzeichnet,

daß die axiale Abmessung der Lagerabschnitte (22) der Lagerbolzen (20) gleich oder kleiner ist als die halbe axiale Abmessung des Lagerauges des ersten Scharnierteils (31).

4. Schaltschrank nach Anspruch 3, dadurch gekennzeichnet,

daß die Lagerabschnitte (22) der Lagerbolzen (20) an ihren freien Enden kegelstumpfartige Einführungsabschnitte (21) aufweisen.

5. Schaltschrank nach einem der Ansprüche 1 bis 4,

dadurch gekennzeichnet, daß die Ringnut (27) und die benachbarte Rastnut (25) des Lagerbolzens (20) über einen Führungsabschnitt (26) voneinander getrennt sind, dessen axiale Abmessung der halben axialen Abmessung der Lageraugen (12, 13) des zweiten Scharnierteils (10) entspricht.

6. Schaltschrank nach einem der Ansprüche 1 bis 5,

dadurch gekennzeichnet,

daß die Rastfedern (18, 29) mit einem abgewinkelten Ende (19) in den Querschnitt (14, 15) der Lageraugen (12, 13) des zweiten Scharnierteils (10) befestigt sind, wobei die Befestigungsstelle jeweils an dem der Lagerbohrung des Lagerauges (12, 13) abgekehrten Ende des Querschlitzes (14, 15) angeordnet ist.

7. Schaltschrank nach einem der Ansprüche 1 bis 6,

dadurch gekennzeichnet,

daß die Lageraugen (12, 13) an einer Befestigungsplatte (11) des zweiten Scharnierteils (10) abstehend angeformt sind,

daß die den Lageraugen (12, 13) abgekehrte Stirnseite der Befestigungsplatte (11) mit einer einzigen Befestigungsaufnahme (16) versehen ist,

daß auf der den Lageraugen (12, 13) abgewandten Befestigungsseite der Befestigungsplatte (11) in Rasterteilung angeordnete Fixieransätze (17) angeformt sind und

daß der vertikale Rahmenschenkel (34) einen zur geschlossenen Schranktür (30) senkrecht stehenden Schließflansch (35) aufweist, dessen Befestigungsfläche mit auf die Rasterteilung der Fixieransätze (17) abgestimmten Fixieraufnahmen (38) versehen ist.

## Claims

1. Control cabinet with cabinet door (30) hinged on the cabinet body, for which each hinge has a first hinge element (31) mounted on the inner side of the cabinet with a boss and a second hinge element (10) which is articulated with a vertical leg frame (34) of the cabinet body which has two bosses (12, 13) and on which pivot pins (20) articulate the boss of the first hinge element (31) respectively which is situated between the two bosses (12, 13) of the second hinge element (31),

characterized by the fact,

that in each of the bosses (12, 13) of the second hinge element (10) a known pivot pin (20) is put with two wedge-shaped locating grooves (23, 25) which are arranged at the same distance and which face each other on the limiting surfaces for the support of a fixed locating spring (18, 29) on the arranged boss (12, 13),

that the pivot pins (20) can be inserted from the ends of the bosses (12, 13) of the second hinge element (10) which does not face the boss of the first hinge element (31) whereby the pivot pins are held in an unlocked position in a respective first position of the locating springs which latch tight into a locating groove,

that in this position the boss of the first hinge element (31) is released, and in a second latching position of the locating springs (18, 29) which latch tight into the other locating grooves (25) the pivot pins are held in an articulated position in which the pivot pins are inserted with a trunnion (22) into the boss of the first hinge element (31) and

that the pivot pins (20) in the latch position protrude from the boss ends of the bosses (12, 13) of the second hinge element (10) which do not face the boss of the first hinge element (31) with a standing out retaining section (28) by means of a groove (27).

2. Control cabinet according to claim 1, characterized by the fact,

that the limiting surfaces which do not face each other and are located vertically to the longitudinal axis of the pivot pin (20) of the two locating grooves (23, 25) respectively are at a distance one to the other which approximately corresponds with half of the axial dimension of the equally designed bosses (12, 13) of the second hinge element (10) and

that the locating springs (18, 19) respectively in the centre of the bosses (12, 13) go into the bores of the bosses (12, 13) via transverse slots (14, 15).

3. Control cabinet according to claim 1 or 2, characterized by the fact,

that the axial dimension of the trunnions (22) of the pivot pins (20) are equal or smaller than half of the axial dimension of the boss of the first hinge element (31).

4. Control cabinet according to claim 3, characterized by the fact,

that the trunnions (22) of the pivot pin (20) have truncated cone type insertion sections (21).

5. Control cabinet according to one of claim 1 to 4,

characterized by the fact,

that the ring groove (27) and the side locating groove (25) of the pivot pin (20) are separated by a guide section (26) the axial dimension of which corresponds with half of the axial dimension of the bosses (12, 13) of the second hinge element (10).

6. Control cabinet according to one of claim 1 to 5,

characterized by the fact,

that the locating springs (18, 29) are fixed with an angular end (19) in the transverse slote (14, 15) of the bosses (12, 13) of the second hinge element (10) whereby the fixing point is on the respective end of the slot (14, 15) which does not face the bore of the boss (12, 13).

7. Control cabinet according to one of claim 1 to 6,

characterized by the fact,

that the bosses (12, 13) are formed protudingly on a fixing plate (11) of the second hinge element (10),

that the front of the fixing plate (11) which does not face the bosses (12, 13) is provided with one single holder (16),

that on the fixing side which does not face the bosses (12, 13) of the fixing plate (11) tongues (17) are formed grid-like and

that the vertical frame leg (34) has a locking flange (35) which is located vertically to the closed cabinet door (30) and the fixing surface of which is provided with fixing holders (38) which match the grid subdivision of the tongues (17).

## Revendications

1. Armoire de distribution comportant une porte (30) d'armoire articulée au corps de l'armoire au moyen de charnières, dans le cas de laquelle chaque charnière présente une première partie (31) de charnière, qui est fixée sur la face intérieure de la porte (30) d'armoire et qui comprend une douille, et présente une seconde partie (10) de charnière, qui est reliée à un rebord vertical (34) du cadre du corps de l'armoire et qui comprend deux douilles (12, 13), et dans le cas de laquelle des broches (20) relient respectivement l'une à l'autre la douille de la première partie (31) de charnière disposée entre les deux douilles (12, 13) de la seconde partie (10) de charnière,

armoire caractérisée en ce que,

dans chaque douille (12, 13) de la seconde partie (10) de charnière, est insérée une broche (20), connue en soi, qui présente deux rainures de crantage (23, 25) disposées à une certaine distance l'une de l'autre et chanfreinées en forme de coin sur les surfaces limites tournées l'une vers l'autre, pour recevoir un ressort de crantage (18, 29) fixé à la douille (12, 13) correspondante,

en ce que les broches (20) peuvent être introduites depuis les extrémités, situées côté opposé à la douille de la première charnière (31), des douilles (12, 13) de la seconde partie (10) de charnière, étant précisé que respectivement, dans une première position de crantage des ressorts de crantage (18, 29) qui viennent se cranter dans les premières rainures de crantage (23), les broches (20) sont maintenues dans une position de découplage dans laquelle elles libèrent la douille de la première partie (31) de charnière,

et étant précisé que, dans une seconde position de crantage des ressorts de crantage (18, 29) qui viennent se cranter dans les autres rainures de crantage (25), les broches (20) sont maintenues dans une position de couplage dans laquelle elles sont introduites, par une portion (22) formant tourillon, dans la douille de la première partie (31) de charnière, et

en ce que, dans la position de couplage, par une portion d'arrêt (28), qui forme un décrochement au moyen d'une rainure annulaire (27), les broches (20) dépassent encore en dehors des extrémités, du côté opposé à la douille de la première partie (31) de charnière, des douilles (12, 13) de la seconde partie (10) de charnière.

2. Armoire de distribution selon la revendication 1, caractérisée,

en ce que les surfaces limites, situées du côté opposé l'une à l'autre et dirigées perpendiculairement à l'axe longitudinal de la broche (20), des deux rainures de crantage (23, 25) se trouvent respectivement à une distance l'une de l'autre qui correspond environ à la demi-longueur axiale des douilles (12, 13), de conception identique, de la seconde partie (10) de charnière,

et en ce que les ressorts de crantage (18, 19) pénètrent respectivement au centre des douilles (12, 13) par des fentes transversales (14, 15) prévues dans les perçages des douilles (12, 13).

3. Armoire de distribution selon la revendication 1 ou 2, caractérisée,

en ce que la longueur axiale des portions (22), formant tourillon, des broches (20) est égale ou inférieure à la demi-longueur axiale de la douille de la première partie (31) de charnière.

4. Armoire de distribution selon la revendication 3, caractérisée,

en ce que les portions (22), formant tourillon, des broches (20) présentent, à leur extrémité libre, des portions d'introduction (21) en forme de tronc de cône.

5. Armoire de distribution selon l'une des revendications 1 à 4, caractérisée,

en ce que la rainure annulaire (27) et la rainure de crantage, voisine (25), de la broche (20), sont séparées l'une de l'autre par l'intermédiaire d'une portion de guidage (26), dont la longueur axiale correspond à la demi-longueur axiale des douilles (12, 13) de la seconde partie (10) de charnière.

6. Armoire de distribution selon l'une des revendications 1 à 5, caractérisée,

en ce que les ressorts de crantage (18, 29) sont fixés, par une extrémité rabattue (19), dans les fentes transversales des douilles (12, 13) de la seconde partie (10) de charnière, étant précisé que la position de fixation correspond respectivement à l'extrémité, située côté opposé au perçage de la douille (12, 13), de la fente transversale (14, 15).

7. Armoire de distribution selon l'une des revendications 1 à 6, caractérisée,

en ce que les douilles (12, 13) sont venues de forme sur une plaquette (11) de fixation de la seconde partie (10) de charnière en s'en écartant,

en ce que le côté frontal, situé du côté opposé aux douilles (12, 13), de la plaquette (11) de fixation comporte un unique taraudage (16) de fixation,

en ce que, sur le côté de fixation, situé du côté opposé aux douilles (12, 13), de la plaquette (11) de fixation sont venus de forme des doigts (17) de fixation disposés selon une division de crantage,

et en ce que le rebord vertical (34) du cadre présente une bordure (35) de fermeture, qui est dirigée perpendiculairement à la porte (30) de l'armoire, fermée, et dont la surface de fixation présente des encoches (38) de fixation correspondant à la division de crantage des doigts (17) de fixation.

Fig.1

Fig.2

0 157 344

Fig.3